# EUROPEAN PATENT APPLICATION

(11) **EP 3 826 147 A1**
(43) Date of publication of application: **26.05.2021**
(21) Application number: 19315137.0
(22) Date of filing: 20.11.2019
(51) Int. Cl.: H02K 3/28, H02K 16/04

(54) **MULTIPLE WINDING ELECTRICAL MACHINE FOR AN AIRCRAFT**

(71) Applicant: Airbus Defence and Space GmbH, 82024 Taufkirchen (DE); AIRBUS HELICOPTERS, 13725 Marignane Cedex (FR)
(72) Inventor: Mariotto, Damien, 82024 Taufkirchen (DE); Schiefer, Markus, 76131 Karlsruhe (DE)
(74) Representative: KASTEL Patentanwälte PartG mbB

(57) **Abstract**

The invention provides an insulation fault to an electrical machine (24) having a rotor (26) and a stator (28),
wherein at least one of the rotor (26) and the stator (28) comprises a multiple winding (30) with at least a first winding circuit (40-1) including first conductor segments (56-1) connected in series and a second winding circuit (40-2) including second conductor segments (56-2) connected in series, the first and second winding circuits (40-1, 40-2) being electrically isolated from each other and preferably from the ground (G),
the conductor segments (56-1, 56-2) comprising an inner conductor (58) and an outer electrical insulation (60),
wherein the first and second conductor segments (56-1, 56-2) are arranged such that conductor segments (56-1, 56-2) which have a direct contact with each other belong to different winding circuits (40-1, 40-2).

## Description

The invention relates to an electrical machine having a rotor and a stator, at least one thereof comprising a multiple winding. Further, the invention relates to an aircraft propulsion system and an aircraft comprising such an electrical machine.

CN 1445908 A discloses a three-phases AC motor comprising a single circuit winding.

EP 2 388 894 A2 discloses an electric motor with a two winding pattern that achieves the benefits of lap winding and concentric winding.

The object of the invention is to provide an electric machine with a high fault tolerance.

This object is achieved by an electric machine according to claim 1. An aircraft propulsion system and an aircraft comprising such an electrical machine form the subject-matters of the further independent claims. Advantageous embodiments form the subject-matters of the dependent claims.

The invention provides, according to one aspect thereof, an electrical machine having a rotor and a stator, wherein at least one of the rotor and the stator comprises a multiple winding with at least a first winding circuit including first conductor segments connected in series and a second winding circuit including second conductor segments connected in series, the first and second winding circuits being electrically isolated from each other and preferably from the ground, the conductor segments comprising an inner conductor and an outer electrical insulation, wherein the first and second conductor segments are arranged such that conductor segments which have a direct contact with each other belong to different winding circuits.

Preferably, the stator has slots with first and second conductor segments therein, wherein the first and second conductor segments are arranged alternately, within each slot.

Preferably, the first and second winding circuits are arranged in the slots turn by turn in the radial direction and/or the peripheral direction of the stator in order to form coils such that each conductor segment of a coil has a direct contact only with the at least one other winding circuit but not with its own winding circuit.

Preferably, the stator has a whole coil configuration or a half coil configuration.

Preferably, the inner conductor is composed of a conductor bar with a square or rectangular cross-section shape or of a single or multifilament wire. Preferably, the outer isolation is formed by an isolating coating of the inner conductor.

Preferably, the first and second winding circuits are electrically isolated from the ground.

Preferably, the first winding circuit is connected to or comprises a first power supply and the second winding circuit is connected to or comprises a second power supply wherein the first and second power supplies are electrically isolated from each other and from the ground.

"Ground" in this aspect means the potential of a structure or a basis part or structure of the armature.

Preferably, each of the power supplies has a first phase terminal and a second phase terminal, and each winding circuit has at least one first coil connected to the first phase terminal of the respective power supply and at least one second coil connected to the second phase terminal of the respective power supply. Preferably each of the power supplies further has a third phase terminal and each winding circuit has at least one third coil connected to the third phase terminal.

Preferably, each power supply further has a third phase terminal and each winding circuit has at least one third coil connected to the third phase terminal of the respective power supply.

Preferably, the electrical machine is one of the group of electrical machines consisting of an inner radial flux 3-phases machine, an outer radial flux 3-phases machine, an inner axial flux 3-phases machine, an outer axial flux 3-phases machine, a transverse flux machine, a 2-phases machine, a multiple phases machine, a permanent magnet synchronous machine, a non-permanent magnet synchronous machine (e.g. asynchronous machine, reluctance machine), an electrical machine with a stator having a concentrated winding, an electrical machine with a stator having a distributed winding and a combination of at least two of the aforementioned machines.

Preferably, the multiple winding comprises a third winding circuit electrically isolated from the first and second winding circuits and including third conductor segments arranged such that the third conductor segments have direct contact only with conductor segments of other winding circuits.

Preferably, the multiple winding has n winding circuits, n being a natural number equal to or greater than two, wherein each winding circuit is configured to provide at least 1/n of the total power of the electrical machine to an output shaft of the electrical machine. In case of one winding insulation failure, the winding circuits could still be operated to provide at least 1/n of the total power via the respective power supply with no over-current, no impact on torque, no degradation of torque and no AC voltage impact.

According to another aspect, the invention provides a propulsion system for an aircraft, comprising an electrical machine according to any of the preceding embodiments.

According to another aspect, the invention provides an aircraft, comprising an electrical machine according to any of the aforementioned embodiments and/or a propulsion system as mentioned above.

Some embodiments of the invention relate to a multiple winding electrical machine. A preferred embodiment relates to a multiple winding electrical machine (motor, generator or motor/generator) for aeronautical power chain. However, electrical machines according to some embodiments of the invention can be used for any applications where machine insulation fault-tolerant solution is sought.

A preferred embodiment of the propulsion system includes an electrical power chain composed of inverters/controllers and a Permanent Magnet Synchronous Machine (PMSM). Such machine provides the highest power density technology available on the market today.

In case of a simplex electrical power chain composed of inverter/controller and Permanent Magnet Synchronous Machine (PMSM), the reliability of the main function (provide power) is of ∼10⁻⁴, depending on final technology and design, taking into account any failure - electrical or mechanical - on the full propulsion chain, i.e. both inverter/controller and machine. However, on top of that some failure could lead to critical risk specific which needs to be mitigated with necessary safety level.

At the present, there is large effort to develop an electrically driven aircraft propulsions wherein a propeller, fan, or propulsion rotor is driven by an electric motor. Hence, there is a need for fault-tolerant electric motors.

In case of an electrical insulation failure in a conventional electric machine, for example a phase to phase short-circuit before the inverter power stage, the inverter will detect it and will stop the switching for disconnecting the electric motor. The electric motor is a power source in case of continuous rotation of the output shaft, due to windmilling in the example of electric propulsion via a fan/propeller/rotor, and due to permanent rotating magnetic field caused by permanent magnets.

In case of phase to phase short-circuit after or at the inverter power stage in a conventional electrical machine, the inverter will detect it but it will not be able to disconnect the source. In case of continuous rotation of the output shaft, this could cause high induced short-circuit current going through the machine, the power cable feeding the short-circuit connection leading to overheating and potentially fire. Hence, up to now, protections are included in the design to mitigate such critical event, for example: a fire zone, a mechanical de-clutch device like freewheel and/or an electrical fuse like pyrofuses. Further, known solutions include to provide a second electric machine as redundant machine, connected for example, via a gear box.

Embodiments of the invention relate to an idea to mitigate the short-circuit inside the machine which is the most probable case due to direct winding contacts between phases or between coils. Indeed the windings, preferably composed of conductor (bar) or wire(s) (single or multi-filament), made of conductive material, like copper or aluminium, play a significant role to create the magnetic field in electrical machines. Preferrably, windings are arranged in different slots of the machine to produce sinusoidal or alternating EMF. Preferably these windings are formed as concentrated or distributed windings.

Conventionally, three-phases machines can have different single winding topologies such as concentrated windings or distributed windings, both in whole coil design or half coil design. Whatever single winding topology or configuration is used, the windings in a slot are always in contact either between coils or between phases. In case that the temperature with the machine exceeds the coating temperature limit of an insulation coating of the conductor segments, e.g. due to an overall or local overload, there is the possibility that the insulation coating will fail leading to a short circuit, e.g. a phase-to-phase short-circuit or coil-to-coil short circuit.

Further, multiple winding machines are known in the prior art, e.g. to provide several power stages of an electrical machine. However, as long as each winding or the same circuit is in contact either between coils or between phases, still there is the potential risk of a short circuit as discussed above for a single winding machine.

According to preferred embodiments, there is only direct contact between different circuits - e.g. first winding circuit and second winding circuit - either between coils or between phases. Preferrably, power supplies - especially inverters - are electrically insulated - for example via an IT-network. This has the advantage that even in case of a failure of the insulation
- no critical fault can occur;
- no over-current will be induced on the failed circuit;
- there will be no degradation of the torque;
- high frequency potential shifts on a DC-link can - depending on machine operation and short-circuit position - could lead to higher EMC but could be mitigated by specific design
- there will be no impact on AC voltage on each isolated circuit
- embodiments of the invention provide a simple, compact and light solution compared to redundant machine connected on gear box.

Some embodiments can provide a dual or double winding machine, especially a dual or double winding motor in form of a fault tolerant machine or motor.

Preferred embodiments of the invention are described in the following with reference to the accompanying drawings in which:
Fig. 1 is a schematic block diagram of an aircraft comprising an electrical propulsion system including an electric motor as example for an elelctrical machine according to an embodiment of the invention;
Fig. 2 shows a sectional view of an concentrated multi-turn whole coiled single winding of a conventional three-phases machine;
Fig. 3 shows a sectional view of an example of a concentrated multi-turn half coil single winding of a conventional three-phases machine;
Fig. 4 shows a sectional view of an example of a distributed multi-turn whole coiled single winding of a conventional three-phases machine;
Fig. 5 shows a sectional view of an example of a distributed multi-turn half coiled single winding of a conventional three-phases machine;
Fig. 6 shows a part of a sectional view of an electrical machine according to an embodiment of the present invention showing an arrangement of conductor segments in a slot of an stator in a whole coil configuration;
Fig. 7 shows a sectional view of a part of an electrical machine according to a further embodiment of the present invention with conductor segments in a slot of an electrical machine in a half coil configuration;
Fig. 8 is a schematic block diagram of an embodiment of an electrical machine according to the invention with different scenarios of a possible insulation fault;
Fig. 9a, 9b, 9c show different views of an arrangement of a multiple winding in a stator of an electrical machine according to an embodiment of the invention which is a three-phases machine having a concentrated multi-turn whole coiled dual winding;
Fig. 10a, 10b, 10c show different views of an arrangement of a multiple winding of an electrical machine according to a further embodiment of the invention which is a three-phases machine having a concentrated multi-turn half coil dual winding;
Fig. 11a, 11b, 11c show different views of a winding configuration of a multiple winding of an electrical machine according to still another embodiment of the present invention which is a three-phases machine with a distributed multi-turn whole coiled dual winding; and
Fig. 12a, 12b, 12c show different views of a winding configuration of a multiple winding of an electrical machine according to another embodiment of the present invention which is a three-phases machine having a distributed multi-turn half coil dual winding.

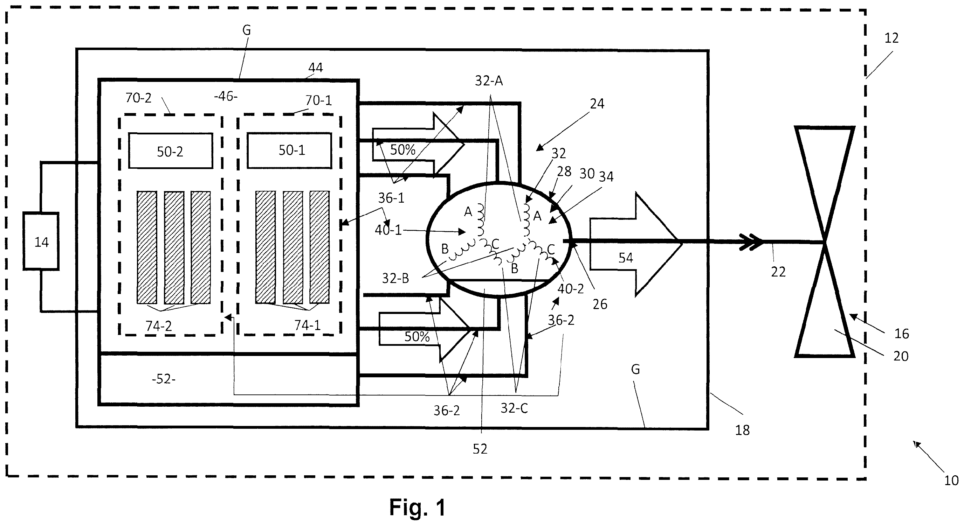

Fig. 1 shows the schematic view of an aircraft 10 with an electrical propulsion system 12. The electrical propulsion system 12 comprises an electrical power source 14, an electrical propulsion drive 18 and an aircraft propulsion element 16.

The electrical power source 14 can include a power storage element, especially a battery, and/or a fuel cell.

The aircraft propulsion element 16 can be, for example, a propeller 20, a fan, a rotor, etc.

The aircraft propulsion element 16 is driven by an output shaft 22 of the electrical propulsion drive 18.

The electrical propulsion drive 18 includes an electrical machine 24 comprising a rotor 26 connected to the output shaft 22 and a stator 28. The electrical machine 24 has a multiple winding 30 for forming coils 32 of the stator 28.

In the following examples, a dual winding 34 is shown as an example of the multiple winding 30, however, the electrical machine 24 can have more than two different windings. More generally, the electrical machine 24 has n windings with n being a natural number equal to 2 or greater than 2. Each winding of the multiple winding 30 forms a sub-machine 36 of the electrical machine 24. In the present example, each sub-machine 36 has three-phases A, B, C. Hence, each sub-machine 36 - each of the n windings - has at least one first coil 32-A of a first phase A, at least one second coil 32-B of a second phase B, and at least one third coil 32-C of a third phase C.

Further, each of the n windings forms a winding circuit. Hence, the multiple winding 30 of the electrical machine 24 has at least one first winding circuit 40-1 and a second winding circuit 40-2 which are electrically isolated from each other.

A motor driver 44 of the electrical machine 24 which can be implemented by an IT-system 46 has a first power supply 70-1 with a first controller 50-1 for driving the first winding circuit 40-1 and a second power supply 70-2 with a second controller 50-2 for driving the second winding circuit 40-1. Each of the power supplies 70-1, 70-2 has inverters 74-1, 74-2 with terminals for the three phases A, B, C.

Further, the electrical machine 24 and the motor driver 44 are cooled by a cooling device 52.

In the shown embodiment of a dual winding configuration 34 (n=2), at least 50% (1/n) of the overall output power 54 on the output shaft 22 can be provided by the first sub-machine 36-1, and 50% (1/n) of the overall output power 54 can be provided by the second sub-machine 36-2. Generally, each sub-machine 36-1, 36-2 formed by separated winding circuits 40-1, 40-2 of a multiple winding 30 is configured such that it can provide at least 1/n of the overall total output power 54.

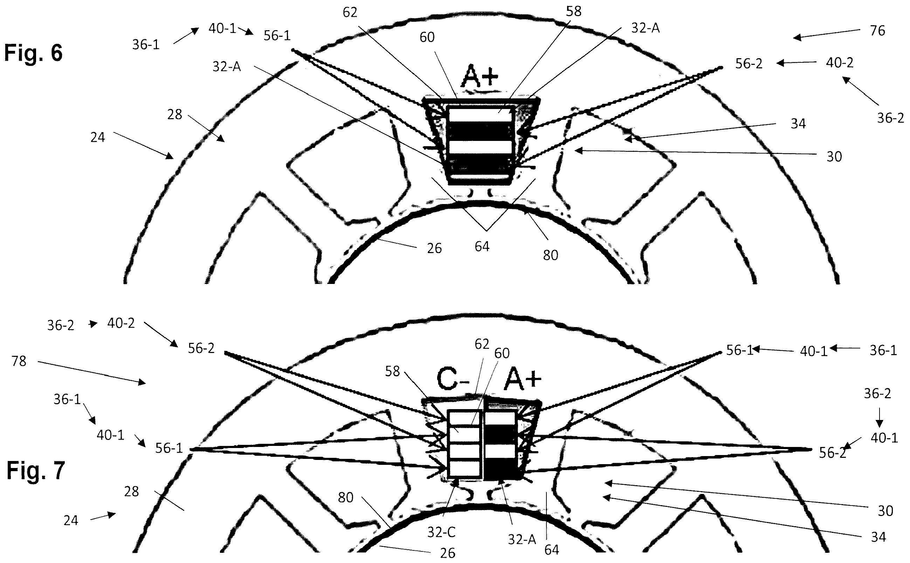

Fig. 6, 7 as well as Fig. 9a-12c show different embodiments of winding configurations for different embodiments of the electrical machine 24 according to the invention. Preferred configurations are concentrated windings or distributed windings, both in a whole coil configuration or in a half coil configuration.

Electrical machines 24 according to the embodiments of the invention have a special winding arrangement principle for providing at least two sub-machines 36-1, 36-2, each providing at least 1/n of the total output power 54 provided to the output shaft 22 and hence to the propeller 20 and/or fan in a normal operation.

Each sub-machine 36-1, 36-2 includes a stator winding circuit 40-1, 40-2 including a power supply 70-1, 70-2 and the rotor 26 of the electrical machine 26.

The rotor 26 is preferably a permanent magnet rotor, but other magnetic rotor types are also possible such as reluctance, asynchronous, wounded etc..

Although the special winding arrangement principle is explained in the following with regard to a stator winding, a similar principle could also be applied to a rotor winding.

Each of the winding circuits 40-1, 40-2 is composed of segments of a conductor which could be formed by bar conductors or wire conductors (single or multi filaments), made of conductive materials such as copper or aluminium, and insulated from each other by a coating. Hence, each conductor segment 56 which forms a part of a coil 32 has an inner conductor 58 and an outer insulator 60. The conductor segments 56 have preferably a shape which enables the maximum filling factor such as rectangular or square. The conductor segments 56 could also be circular or elliptic even though this is less preferred in view of the filling factor.

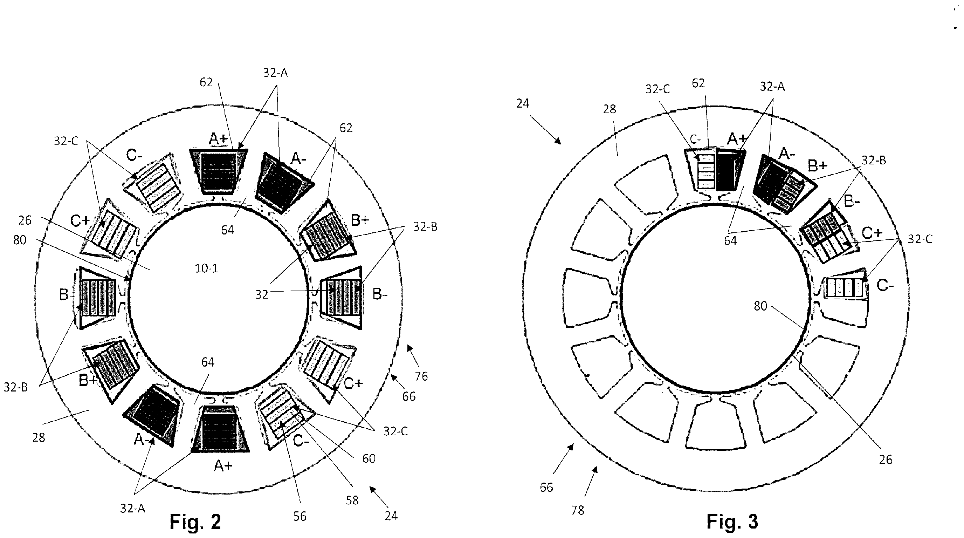

Figs. 2 to 5 show sections through conventional electrical machines 24 with a stator 28 with a conventional single winding configuration in order to explain the principle of concentrated windings and distributed windings as well as the principle of a whole coil winding configuration and a half coil winding configuration.

Fig. 2 shows an example of a concentrated multi-turn whole coil single winding of a three-phases machine. The three-phases machine has the stator 28 with several slots 62 in which conductor segments 56 of the different phases A, B, C are introduced. The current direction of the conductor segment in the slot is indicated by + or by -. As visible from Fig. 2, each coil 32, 32-A, 32-B, 32-C of a specific phase A, B, C is wounded around one tooth 64 of the stator 28.

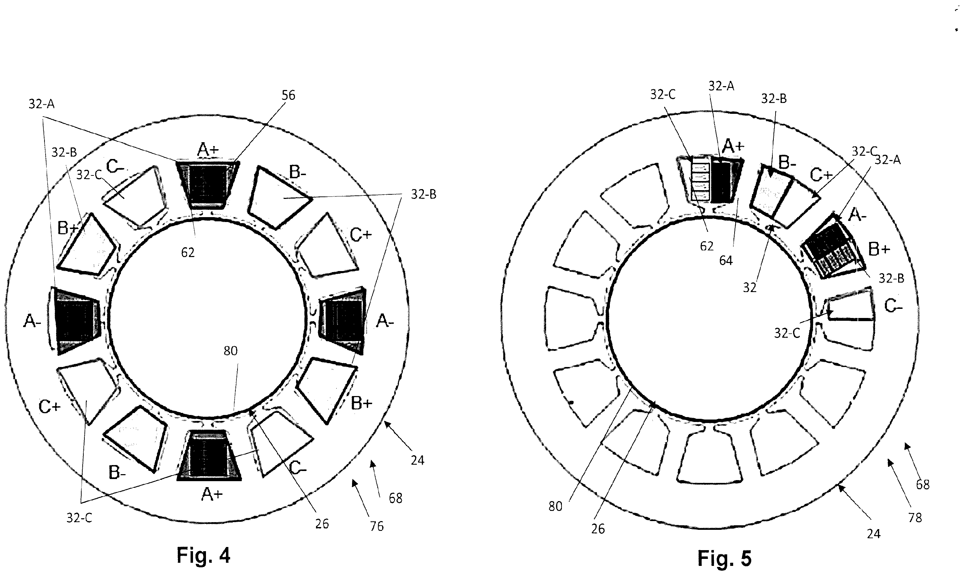

The concentrated winding configuration 66 is employed where the numbers of slots 62 per phase per pole is fractional and inferior to 1. Thus, compared to the distributed winding configuration 68 as shown in Figs. 4 and 5, the concentrated winding configurations 66 as shown in Figs. 2 and 3 have a theoretical winding factor of 0.984. This armature winding gives best performance with maximum voltage but not exactly sinusoidal.

Compared to the distributed winding configuration 68, the advantages of the concentrated winding configuration 66 are the following:
- it provides the best performance with maximum output voltage,
- due to short end windings, it improves the thermal exchange and space envelope,
- manufacturing is much easier and cheaper, especially at the same filling factor
The most common concentrated winding topology is the multi-turn whole coil single winding as shown in Fig. 2. However, to get an higher EMF, a multi-turn half coil winding configuration as shown in Fig. 3 is usually chosen.

In the following the principle of the distributed winding configuration 68 is explained referring to Fig. 4 and 5, wherein Fig. 4 shows an example of a distributed multi-turn whole coil single winding, and Fig. 5 shows an example of distributed multi-turn half coil single winding.

To obtain a smooth sinusoidal EMF wave form, conductor segments 56 are placed in several slots 62 under the single pole. This distributed winding configuration 68 is employed where the number of slots 62 per phase per pole is 1. Thus, compared to the concentrated winding configuration 66 as shown in Fig. 2 and 3, the distributed winding configuration 68 has a theoretical winding factor of 1. This armature winding gives better sinusoidal wave form, but less performance with less output voltage.

Compared to the concentrated winding configuration 68, the distributed winding configuration 66 has the following advantages:
- it reduces harmonic EMF, and so the wave form is improved leading to better efficiency and less Thdi harmonics distortion, reducing the filter at inverter level,
- it diminishes armature reaction.

Similar to the concentrated winding, with same advantages, the distributed winding can be either distributed with whole or half coil as shown in Fig. 4 and 5.

All the Figs. 2 to 5 show a conventional winding configuration with a single winding. All conductor segments 56 are part of the same winding and form only one winding circuit. Whichever of the single winding configurations is chosen, the windings are always in contact either between coils 32 or between phases A, B, C.

The outer insulator 60 is formed by an insulating coating. The insulating coating is normally made of a polymer with a specific melting temperature which defines the coating temperature limit. For example, 240° Celsius wires are commonly used. Any coil coating degradation due to over temperature exceeding the temperature limit of the wire, for example in case of an overall overload or of an local overload or overtime (endurance), is considered as single insulation failure, and there is the risk that this will lead to a short-circuit, either coil to coil or phase to phase, depending on the winding topology and localization of the failure. If the short-circuit overcurrent is not removed in time, there are further potential risks such as over-heating and fire. Hence, special safety measures have to be taken with the conventional winding configurations.

According to embodiments of the invention, a direct contact is only allowed between different winding circuits 40-1, 40-2, either between coils or between phases. The power supplies 70-1, 70-2 with inverters 74-1, 74-2 are electrically insulated, for example by implementation in an IT network. Hence, the risk of critical fault occurrence is eliminated. There will be no over-current induced on the failed circuit, there will be no degradation of the torque and there is no impact on AC voltage on each isolated circuit.

In order to provide this, the conductor segments 56-1, 56-2 which have direct contact to each other, for example, the conductor segments 56-1, 56-2 which share one slot 62 of the stator 28, are distributed between the isolated winding circuits 40-1, 40-2, as this is shown in Fig. 6 for the whole coil configuration and in Fig. 7 for the half coil configuration.

In Fig. 6, and 7, the arrangement is shown in only one of the slots 62, however, it should be understood that similar configurations are arranged in the further slots 62, too.

The first winding circuit 40-1 is made of first conductor segment 56-1 connected in series to form coils 32, 32-A, 32-B, 32-C of the first sub-machine 36-1. The second winding circuit 40-2 is made of second conductor segments 56-2 which are connected in series to form the coils 32, 32-A, 32-B, 32-C of the second sub-machine 36-2.

Each conductor segment 56-1 of one 40-1 of the winding circuits 40-1, 40-2 makes direct contact only with a conductor segment 56-2 of the other 40-2 of the winding circuits 40-1, 40-2, but not with conductor segments 56-1 of the same winding circuit 40-1. For example, first conductor segments 56-1 and second conductor segments 56-2 are arranged in an alternating manner, on top of each other.

Fig. 6 shows an arrangement of first and second conductor segments 56-1, 56-2 for an example of a whole coil configuration 76 within one of the slots 62 of the stator 28. Referring to Fig. 6, a second conductor segment 56-2 of a first turn is arranged above a first conductor segment 56-1 of a first turn, then a first conductor segment 56-1 of a second turn is arranged on the second conductor segment 56-2 of the first turn, then the second conductor segment 56-2 of the second turn is arranged on the first conductor segment 56-1 of the second turn, and so on.

Thus, the windings of the first winding circuit 40-1 do not have a direct radial contact with windings of the same first winding circuit 40-1, but have only direct radial contact with windings of the second winding circuit 40-2.

Fig. 7 shows the situation for a half coil configuration. A first conductor segment 56-1 of a first phase A+ of the first winding circuit 40-1 and a first conductor segment 56-1 of a third phase C- of the first winding circuit 40-1 and a second conductor segment 56-2 of a first phase A+ of the second winding circuit 40-2 and second conductor segment 56-2 of a third phase C- of the second winding circuit 40-2 are arranged together in one of the slots 62.

As visible from Fig. 7, the first conductor segments 56-1 of the first phase A+ of the first winding circuit 40-1 are arranged turn by turn on the second conductors segment 56-2 of the first phase A+ of the second winding circuit 40-2, similar as this has been explained for the whole coil configuration 76 of Fig. 6. In addition, in the half coil configuration 78 of Fig. 7, second conductor segments 56-2 of the third phase C- of the second winding circuit 40-2 are placed turn by turn alternating manner with first conductor segments 56-1 of the third phase C- of the first winding circuit 40-1. Here, the arrangement is such that second conductor segments 56-2 of the third phase C- are adjacent - in the peripheral direction - to first conductor segments 56-1 of the first phase A +.

Hence, there is no direct contact of windings of the same winding circuit 40-1, 40-2 in the radial direction, and further, there is no direct lateral contact between windings of the same winding circuit 40-1, 40-2 in the peripheral direction.

Hence, Fig. 6 and 7 show examples of a winding arrangement principle to form at least two sub-machines 36-1, 36-2. Each sub-machine 36-1, 36-2 provides at least 50% of the total power provided to the output shaft 22, and the aircraft propulsion element 16, such as a propeller 20 or fan connected therewith in a normal operation.

Each of the sub-machines 36-1, 36-2 includes the rotor 26 and a winding circuit 40-1, 40-2 for the stator 28. The rotor 26 is preferably a rotor with permanent magnets 80. In other embodiments, the rotor 26 has another rotor magnetic type, such as reluctance, asynchronous, wounded, etc.... The first and second winding circuits 40-1, 40-2 are composed of a conductor or wires made of conductive material insulated from each other by a coating. The shape of the conductors or wires is preferably rectangular or square in order to enable the maximum filling factor. Other shapes are possible. The conductor segments 56-1, 56-2 which form turns of the respective coils 32, 32-A, 32-B, 32-C are arranged in a slot 62 turn by turn, in the radial and/or in the peripheral direction from the machine axis such that each circuit coil conductor segment on top or adjacent of each other belongs to different winding circuits 40-1, 40-2. Thus, each layer or turn has a direct adjacent contact only with the other winding circuit 40-1, 40-2 and not with its own winding circuits as shown in Fig. 6 for a whole coil configuration and in Fig. 7 for the half coil configuration.

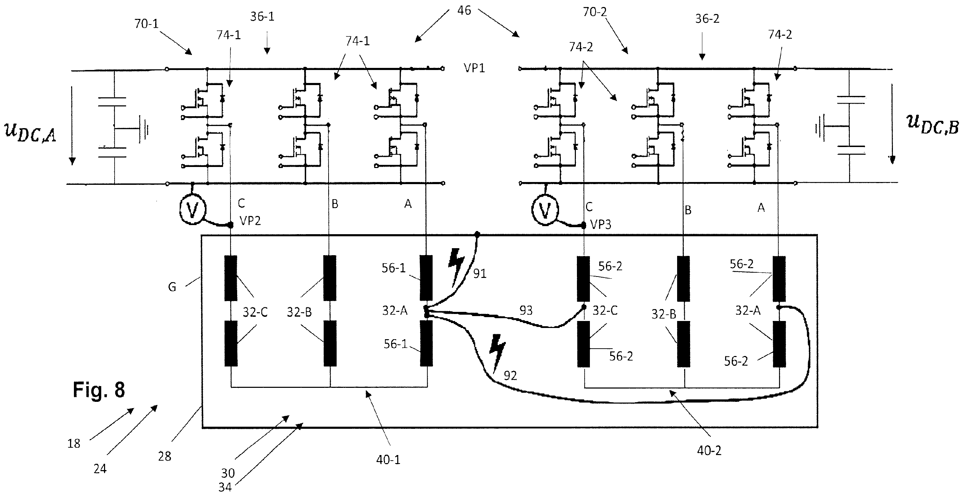

As visible from Fig. 8, the power supplies 70-1, 70-2 with the respective controllers 50-1, 50-2 and the respective inverters 74-1, 74-2 are electrically isolated from each other and from the ground G.

Fig. 8 shows three possible cases 91, 92, 93 of an insulation fault due to a local or overall over-heating. A first case 91 shows an insulation fault of a conductor segments 56-1 in an area where this conductor segment 56-1 makes direct contact with the stator 28, and hence with the ground G. A second case 92 shows an example of an insulation fault between the first conductor segment 56-1 of the first phase A of the first winding circuit 40-1 and the second conductor segment 56-2 of the first phase A of the second winding circuit 40-2, for example an insulation fault between the adjacent first and second conductor segment 56-1, 56-2 shown in Fig. 6. A third case 93 shows an example of an insulation fault between a first and second conductor segment 56-1, 56-2 of different phases A, C, for example two of the conductor segments 56-1, 56-2 which are arranged adjacent to each other in the peripheral direction in Fig. 7.

As visible from Fig. 8, the power supplies 70-1, 70-2 are isolated from each other and from the ground G via an IT system 46. Moreover each coil 32-A, 32-B, 32-C or turn of one winding circuit 40-1, 40-2 is only in contact with the other winding circuit 40-2, 40-1. In case of a coil insulation failure, there is no coil-to-coil or phase to phase short-circuit, but only potential insulation failure between the first and second winding circuit 40-1, 40-2 as shown in cases 92 and 93 in Fig. 8. Also, if an insulation fault occurs, as shown in cases 92 and 93, no fault of the function of the electric machine occurs. There will be no over-current, no degradation of torque, no AC voltage impact. There may be a small potential shift which can be mitigated by design. VP1, VP2 and VP3 indicate the different voltage potentials.

In case of a coil to ground structure insulation failure, as shown in the first case 91 of Fig. 8, also no fault occurs as each power supply 70-1, 70-2 is isolated from each other and from any ground G - due to the implementation in the IT-system 46.

Hence, the proposed winding configuration enables to continue to operate safely in case of wire insulation failure.

The description of the winding configuration has been made by way of an example referring to a dual winding configuration 34 for two sub-machines with two winding circuits 40-1, 40-2 (n=2). In case of the number n of sub-machine higher than 2, with the number of winding circuits 40-1, 40-2 also higher than 2, the same principle apply. Also with this configuration, each winding conductor segment 56-n is arranged in a slot 62 turn by turn, each circuit coil on top or aside of each other belongs to different winding circuits 40-n, thus that each layer or turn, i.e. each conductor segment 56-n has a direct contact (adjacent in the radial and/or peripheral direction), only with another circuit and not with its own circuit. This is achieved, for example, by an alternating configuration in both or either radial and peripheral direction from the machine axis. For example, for a configuration of n=3 winding circuits, the alternating winding configuration could be:
- first conductor segment 56-1 of the first phase A+ of the first winding circuit 40-1, then,
- second conductor segment 56-2 of the first phase A+ of the second winding circuit 40-2, and then
- third conductor segment of the first phase A+ of a third winding circuit together in one slot 62
for the whole coil configuration, and
- first conductor segment 56-1 (phase A+), then, second conductor segment 56-2 (phase A+), and then third conductor segment (phase A+) on one side and
- second conductor segment (phase C-), third conductor segment (phase C-), and then first conductor segment (phase C-) on the other side in one slot 62
for the half coil configuration.

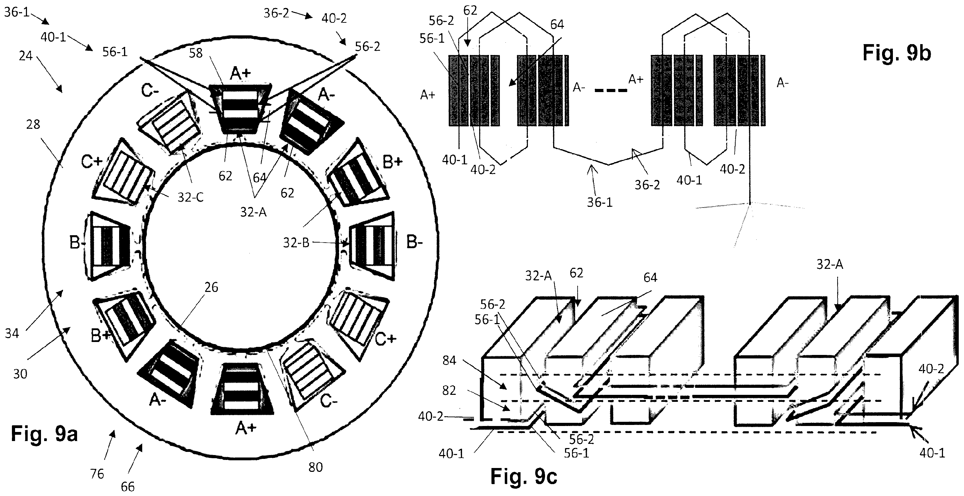

In the following, preferred embodiments of the electrical machine 24 are described referring to Figs. 9 to 12. The embodiments of the electrical machine 24 as shown in Figs. 9 to 12 form a multiple winding electric power chain, comprising n windings for forming n sub-machines 36-1, 36-2 including n power supplies 70-1, 70-2 with n controllers 50-1, 50-2, a stator 28 and a rotor 26 to form a Permanent Magnet Synchronous Machine.

The winding configuration with multiple windings wherein conductor segments 56-1, 56-2 thereof make only contact with other winding circuits, but not with their own winding circuits, is applicable to all types of machines, as for example the most important type of machines
- inner/outer radial flux 3-phases machine,
- inner/outer axial flux 3-phases machine.

Both solutions will be described referring to Figs. 9 to 12 below. However, other types of machines, such as transverse flux machines or multi-phases machines (for example 2-phases machines, or machines with a higher number of phases), a permanent magnet synchronous machine, a non-permanent magnet synchronous machine (e.g. asynchronous machine, reluctance machine) or the combination of those machines could apply the idea of the winding configuration by similar processes.

Figs. 9 to 12 show different embodiments of an inner radial flux machine with three phases A, B, C.

Embodiments of the electrical machine 24 comprise at least two sub-machines 36-1, 36-2, wherein three or a higher number of sub-machines are also possible. An armature winding of the electrical machine 24 especially a stator winding, has a first and second winding circuit 40-1, 40-2, conductor segments 56-1, 56-2 thereof being arranged in the same machine slot 62. A number of three or a higher number of winding circuits is also possible. The winding circuits 40-1, 40-2 within the machine slot 62 are specifically arranged such that one coil 32-A, 32-B, 32-C, made of a single or multi-filament bars or wires with insulation coating, of phase A of the first winding circuit 40-1 is in contact either on the radial and/or peripheral direction, with the phase A of the second winding circuit 40-2, or with another phase as long as it belongs to the second winding circuit 40-2, as shown in Fig. 9a and 9b for the case of a concentrated multi-turn whole coiled dual winding of 3-phases machine.

A special alternate or sandwich arrangement of first and second conductor segments 56-1, 56-2, belonging to different winding circuits 40-1, 40-2, is made possible by jumping of the level or layer outside of the slot 62 as shown in Fig. 9c. Fig. 9c shows a jumping of the winding from a first layer 82 to a second layer 84 for the two first concentrated turns and then, from the second layer 84 to the first layer 82 for the two second concentrated turns.

With such a design, every winding or coil or first conductor segment 56-1 of the first winding circuit 40-1 is always in contact with the other winding circuit 40-2 and never with its own winding circuit 40-1, preventing any coil to coil or phase to phase short-circuit in case of an insulation failure.

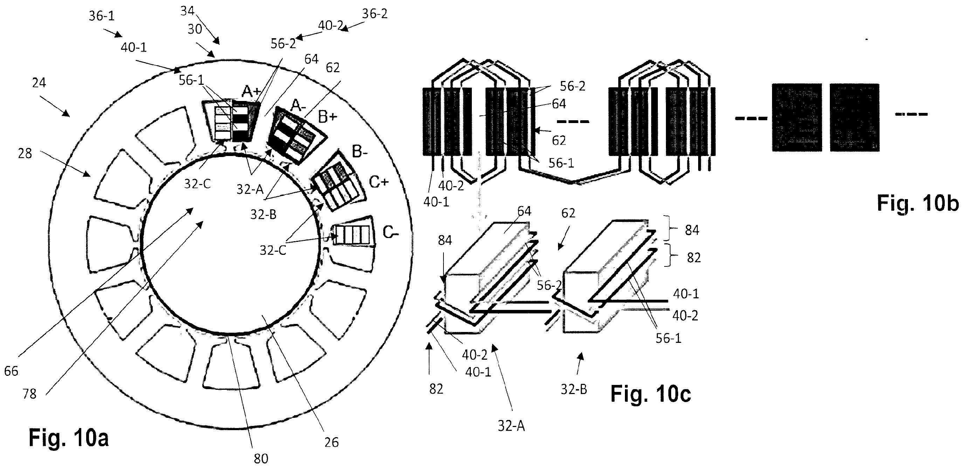

Fig. 10 shows a winding configuration for concentrated multi-turn half coil dual winding of a three-phases machine. In case of a half coil arrangement, as shown in Fig. 10, inside the slot 62, each coil of phase A of the first winding circuit 40-1 is in contact, in radial direction, with the phase A of the second winding circuit 40-2, or with another phase, as long as it belongs to the second winding circuit 40-2, and in peripheral direction, with the phase B of the second winding circuit 40-2.

As explained before, outside the slot 62, each coil jumps from a first layer 82 to another layer 84, to have always alternating distribution between the first winding circuit 40-1 and the second winding circuit 40-2.

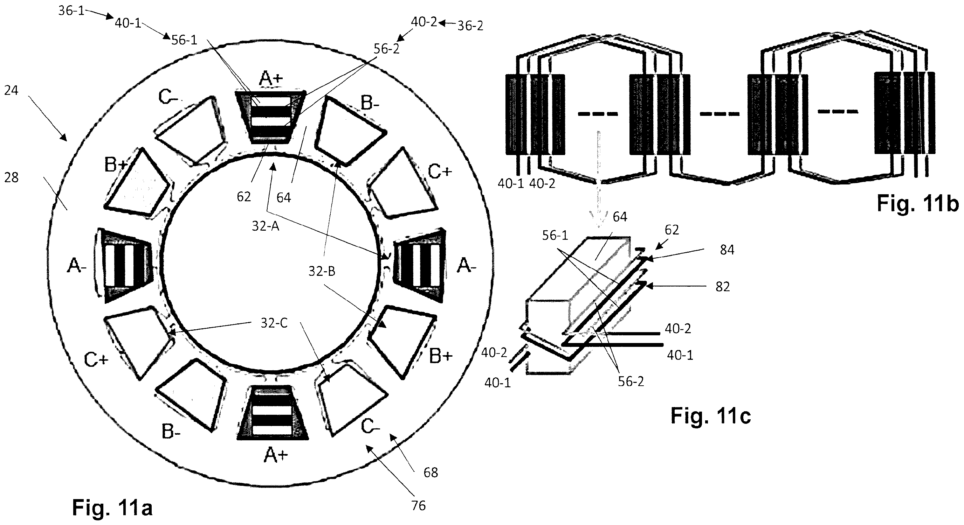

Fig. 11 shows a winding configuration for a distributed multi-turn whole coil dual winding of a three-phases machine. A similar principle of a layer change applies as explained above for the concentrated winding configuration of Fig. 9.

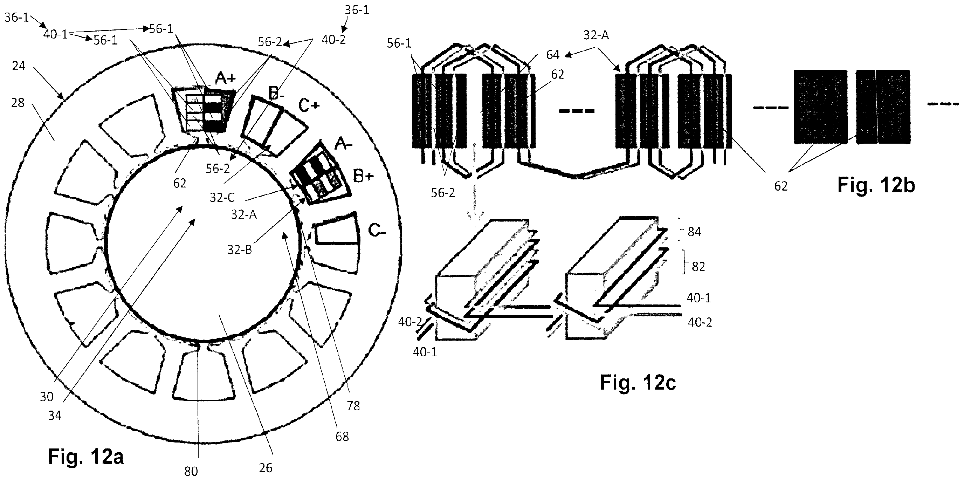

Fig. 12 shows the winding configuration for the distributed multi-turn half coiled dual winding of a 3-phases machine. A similar principle of layer change applies as this has been described with reference to the concentrated multi-turn half coil winding configuration of Fig. 10.

Similar principles are also applicable to other variants of electrical machines 24 such as axial flux machines (not shown). Axial flux machines, in theory, have a better torque density than radial flux machines. However, they are usually rotating at a low speed and are not adapted to high speeds due to the more complex assembly and correct balancing of the rotor. But the idea of the winding configuration, as explained above, could also be applied to such topology with the same winding arrangement principle.

### List of reference numbers:

- 10: aircraft
- 12: electrical propulsion system
- 14: electrical power source
- 16: aircraft propulsion element
- 18: electrical propulsion drive
- 20: propeller
- 22: output shaft
- 24: electrical machine
- 26: rotor
- 28: stator
- 30: multiple winding
- 32: coil
- 32-A: first phase coil
- 32-B: second phase coil
- 32-C: third phase coil
- 34: dual winding
- 36-1: first sub-machine
- 36-2: second sub-machine
- 40-1: first winding circuit
- 40-2: second winding circuit
- 44: motor driver
- 46: IT-system
- 50-1: first controller
- 50-2: second controller
- 52: cooling device
- 54: output power on output shaft
- 56: conductor segment
- 56-1: first conductor segment
- 56-2: second conductor segment
- 58: inner conductor
- 60: outer insulator
- 62: slot
- 64: tooth
- 66: concentrated winding configuration
- 68: distributed winding configuration
- 70-1: first power supply
- 70-2: second power supply
- 74-1: first inverter
- 74-2: second inverter
- 76: whole coil configuration
- 78: half coil configuration
- 80: permanent magnet
- 82: first layer
- 84: second layer
- 91: first case
- 92: second case
- 93: third case
- A: first phase
- B: second phase
- C: third phase
- G: ground
- U_{DC}, A: DC voltage of first power supply
- U_{DC}, B: DC voltage of second power supply
- VP1: first voltage potential
- VP2: second voltage potential
- VP3: third voltage potential

## Claims

1. Electrical machine (24) having a rotor (26) and a stator (28),
wherein at least one of the rotor (26) and the stator (28) comprises a multiple winding (30) with at least a first winding circuit (40-1) including first conductor segments (56-1) connected in series and a second winding circuit (40-2) including second conductor segments (56-2) connected in series, the first and second winding circuits (40-1, 40-2) being electrically isolated from each other,
the conductor segments (56-1, 56-2) comprising an inner conductor (58) and an outer electrical insulation (60),
wherein the first and second conductor segments (56-1, 56-2) are arranged such that conductor segments (56-1, 56-2) which have a direct contact with each other belong to different winding circuits (40-1, 40-2).

2. Electrical machine (24) according to claim 1,
**characterized in that** the first and second winding circuits (40-1, 40-2) are electrically isolated from each other and from the ground (G).

3. Electrical machine (24) according to claim 1 or 2,
**characterized in that** the stator (28) has slots (62) with first and second conductor segments (56-1, 56-2) therein, wherein the first and second conductor segments (56-1, 56-2) are arranged alternately.

4. Electrical machine (24) according to claim 3,
**characterized in that** the first and second winding circuits (40-1, 40-2) are arranged in the slots (62) turn by turn in the radial direction and/or the peripheral direction of the stator (28) in order to form coils (32, 32-A, 32-B, 32-C) such that each conductor segment (56-1, 56-2) of a coil (32, 32-A, 32-B, 32-C) has a direct contact only with the at least one other winding circuit (40-1, 40-2) but not with its own winding circuit (40-1, 40-2).

5. Electrical machine (24) according to claim 3 or 4,
**characterized in that** the stator (28) has a whole coil configuration (76) or a half coil configuration (78).

6. Electrical machine (24) according to any of the preceding claims,
**characterized in that** the inner conductor (58) is composed of a conductor bar with a square or rectangular cross-section shape or of a single or multifilament wire and the outer isolation (60) is formed by an isolating coating of the inner conductor (58).

7. Electrical machine (24) according to any of the preceding claims,
**characterized in that** at least the first winding circuit (40-1) is connected to or comprises a first power supply (70-1) and the second winding circuit (40-2) is connected to or comprises a second power supply (70-2) wherein the first and second power supplies (70-1, 70-2) are electrically isolated from each other and from the ground (G).

8. Electrical machine (24) according to claim 7,
**characterized in that** each power supply (70-1, 70-2) has at least a first phase terminal and a second phase terminal, and each winding circuit (40-1, 40-2) has at least a first coil (32-A) connected to the first phase terminal of the respective power supply (70-1, 70-2) and a second coil (32-B) connected to the second phase terminal of the respective power supply (70-1, 70-2).

9. Electrical machine (24) according to any of the preceding claims,
wherein the electrical machine (24) is one of the group of electrical machines (24) consisting of an inner radial flux 3-phases machine, an outer radial flux 3-phases machine, an inner axial flux 3-phases machine, an outer axial flux 3-phases machine, a transverse flux machine, a 2-phases machine, a multiple phases machine, a permanent magnet synchronous machine, a non-permanent magnet synchronous machine, an asynchronous machine, a reluctance machine, an electrical machine (24) with a stator (28) having a concentrated winding, an electrical machine (24) with a stator (28) having a distributed winding and a combination of at least two of the aforementioned machines.

10. Electrical machine (24) according to any of the preceding claims,
**characterized in that** the multiple winding (30) comprises a third winding circuit electrically insulated from the first and second winding circuits (40-1, 40-2) and including third conductor segments arranged such that the third conductor segments have direct contact only with conductor segments (56-1, 56-2) of other winding circuits (40-1, 40-2).

11. Electrical machine (24) according to any of the preceding claims,
**characterized in that** the multiple winding (30) has n winding circuits (40-1, 40-2), n being a natural number equal to or greater than two, wherein each winding circuit (40-1, 40-2) is configured to provide at least 1/n of the total power of the electrical machine (24) to an output shaft (22) of the electrical machine (24).

12. Propulsion system (12) for an aircraft (10), comprising an electrical machine (24) according to any of the preceding claims.

13. Aircraft (10), comprising an electrical machine (24) according to any of the claims 1 to 11 and/or a propulsion system (12) according to claim 12.
